# EUROPÄISCHE PATENTSCHRIFT

(11) **EP 3 390 175 B1**
(45) Veröffentlichungstag und Bekanntmachung des Hinweises auf die Patenterteilung: **21.08.2019**
(21) Anmeldenummer: 16801380.3
(22) Anmeldetag: 09.11.2016
(51) Int. Cl.: B60T 7/04, B60T 7/06, B60T 8/40, B60T 15/04, B60T 11/18, B22D 17/00, B22D 19/00

(54) **ANORDNUNG MIT EINEM IN EINER FÜHRUNG IN EINEM GEHÄUSEDECKEL ANGEORDNETEN STÖSSELKOLBEN UND VERWENDUNG DERSELBEN IN EINEM PNEUMATISCHEN BREMSWERTGEBER**
PISTON GUIDE IN HOUSING COVER, AND USE OF SUCH A COVER IN A PNEUMATIC BRAKE DRIVERS VALVE
GUIDE DE PISTON DANS UN COUVERCLE DE BOÎTIER, ET USAGE D'UN TEL COUVERCLE DE BOÎTIER DANS UN SOUPAPE PNEUMATIQUE DE FREINAGE

(30) Priorität: 19.12.2015 DE 102015016661
(43) Veröffentlichungstag der Anmeldung: 24.10.2018
(73) Patentinhaber: WABCO GmbH, 30453 Hannover (DE)
(72) Erfinder: BEIER, Peter, 31515 Wunstorf (DE); ELZE, Petra, 30455 Hannover (DE); FABIAN, Alexander, 31224 Peine (DE); HÖRSTMANN, Jan, 31275 Lehrte (DE); MARTENS, Bettina, 30161 Hannover (DE); MARTINI, Gerhard, 30989 Gehrden (DE)
(74) Vertreter: Schwarzweller, Thomas
(86) Internationale Anmeldenummer: PCT/EP2016/001850
(87) Internationale Veröffentlichungsnummer: WO 2017/102045

(56) Entgegenhaltungen:
- DE-A1- 3 343 172
- DE-A1-102014 010 815

## Beschreibung

Die Erfindung betrifft eine Anordnung mit einem in einer Führung in einem Gehäusedeckel angeordneten Stößelkolben, der über eine Druckplatte und eine Druckfeder auf einen in einem Gehäuse geführten Kolben wirkt. Außerdem betrifft die Erfindung die Verwendung dieser Anordnung in einem bremspedalbetätigten, pneumatischen Bremswertgeber für ein Druckluftbremssystem eines Fahrzeugs zum Ausregeln eines einer gewünschten Bremswirkung entsprechenden Bremsdrucks.

In der DE 33 43 172 A1 ist eine derartige Anordnung in Verbindung mit einem bremspedalbetätigten, pneumatischen Bremswertgeber offenbart. Die Anordnung umfasst einen in einer Führung in einem Gehäusedeckel angeordneten Stößelkolben, der mittels einer Druckfeder auf einen in einem Gehäuse geführten Ventilkolben wirkt. Die Führung im Gehäusedeckel besteht aus einem über einen Flansch des Gehäusedeckels axial nach außen ragenden hohlzylindrischen Fortsatz. Der Stößelkolben weist radial außen einen Flansch auf, dessen Außenfläche in dem hohlzylindrischen Fortsatz des Gehäusedeckels geführt ist und dessen Weg durch einen Pedalanschlag im Gehäusedeckel begrenzt ist. Aufgrund des verhältnismäßig großen Durchmessers der Führung des Stößelkolbens, der nur eine geringe axiale Länge aufweist, besteht die Gefahr, dass sich der Stößelkolben verkantet und in der Führung verklemmt. Des Weiteren erfordern zumindest die zylindrische Führungsfläche des hohlzylindrischen Fortsatzes am Gehäusedeckel sowie der Pedalanschlag eine mechanische Bearbeitung derselben, um eine Gleitpassung zwischen dem zylindrischen Fortsatz und dem Stößelkolben sowie einen genau dimensionierten Pedalweg durch den Pedalanschlag zu gewährleisten.

Die weiteren Einzelheiten dieses bekannten pneumatischen Bremswertgebers entsprechen der üblichen Bauweise für ein Zweikreis-Druckluftbremssystem eines Fahrzeugs zum Ausregeln eines einer gewünschten Bremswirkung entsprechenden Bremsdrucks. Dessen Aufbau und Funktion lassen sich aus der erwähnten DE 33 43 172 C2 entnehmen, sind aber nicht Teil der vorliegenden Erfindung.

Außerdem offenbart DE 10 2014 010 815 A1 ein elektropneumatisches Regelventil, insbesondere einen elektropneumatischen Zwei-Kreis-Bremswertgeber in einem Druckluftbremssystem eines Fahrzeugs, zum Ausregeln eines einer gewünschten Bremswirkung entsprechenden Bremsdrucks in einem ersten Bremskreis und in einem zweiten Bremskreis.

Vor diesem Hintergrund liegt der Erfindung die Aufgabe zugrunde, die Herstellung der eingangs erwähnten Anordnung zu vereinfachen, um dadurch eine Kostenersparnis gegenüber herkömmlichen technischen Lösungen zu erzielen und eine Verkantung des Stößelkolbens zu vermeiden.

Diese Aufgabe wird durch eine Anordnung gemäß den Merkmalen des Anspruchs 1 gelöst, während die Unteransprüche vorteilhafte Weiterbildungen beschreiben. Der einzige Verwendungsanspruch definiert eine vorteilhafte Verwendung des Erfindungsgegenstandes.

Demnach geht die Erfindung zunächst aus von einer Anordnung mit einem in einer Führung in einem Gehäusedeckel angeordneten Stößelkolben, der über eine Druckplatte und eine Druckfeder auf einen in einem Gehäuse geführten Kolben wirkt. Weiter ist vorgesehen, dass der Gehäusedeckel mit dem Gehäuse verschraubt ist, dass der Gehäusedeckel aus einem formfesten, in den Einbauabmessungen gießbaren Material besteht, dass die Führung aus einem formfesten, in den Einbauabmessungen gießbaren Material mit guten Gleiteigenschaften besteht, und dass die Führung mit dem Gehäusedeckel verschraubt oder verklipst ist.

Vorzugweise kann der Gehäusedeckel aus einer Leichtmetalllegierung bestehen und als Druckgussteil ohne zusätzliche mechanische Bearbeitung hergestellt sein, während die Führung aus spritzgießfähigem Kunststoff bestehen kann und als Spritzgussteil ohne zusätzliche mechanische Bearbeitung hergestellt sein kann.

Die angestrebte Herstellkostenersparnis besteht darin, dass sich sowohl der Gehäusedeckel als auch die Führung als Druckgussteil beziehungsweise als Spritzgussteil ohne zusätzliche mechanische Bearbeitung herstellen lassen, wobei der als Druckgussteil hergestellte Gehäusedeckel vorzugsweise aus einer Leichtmetalllegierung bestehen kann und die bei der Betätigung der Anordnung auftretenden hohen Kräfte aufnimmt, während die als Spritzgussteil hergestellte Führung gute Gleiteigenschaften aufweist, wodurch der Verschleiß reduziert wird.

Der Gehäusedeckel kann vorzugsweise einen Flansch mit Bohrungen zum Verschrauben mit einer Endfläche des Gehäuses sowie einen zylindrischen, in das Gehäuse eingeführten Fortsatz aufweist, dass die Führung einen den Flansch des Gehäusedeckels wenigstens teilweise übergreifenden und auf diesen aufliegenden Radialflansch sowie eine in den zylindrischen Fortsatz des Gehäusedeckels spielfrei eingepassten koaxialen hohlzylindrischen Fortsatz zur Aufnahme und Führung des Stößelkolbens aufweist.

Eine vorteilhafte konstruktive Ausgestaltung darin bestehen kann, dass der Gehäusedeckel einen ersten, in das Gehäuse eingepassten radial äußeren hohlzylindrischen Fortsatz und einen zweiten, koaxialen, frei in das Gehäuse ragenden hohlzylindrischen, radial inneren Fortsatz aufweist, dass der radial innere Fortsatz im Bereich des Flansches des Gehäusedeckels zu einem Bereich mit größerem Durchmesser hin abgesetzt ist, dass die Führung einen in den zweiten radial inneren Fortsatz des Gehäusedeckels eingepassten ersten hohlzylindrischen, radial inneren Fortsatz sowie einen koaxialen, über den auf dem Flansch des Gehäusedeckels aufliegenden Radialflansch der Führung axial hinausragenden, zweiten zylindrischen Fortsatz aufweist, dass der Stößelkolben als Stufenkolben ausgebildet ist, dessen Bereich kleineren Durchmessers in dem in den radial inneren Fortsatz des Gehäusedeckels eingepassten radial inneren Fortsatz der Führung geführt ist, und dass der Bereich größeren Durchmessers des Stößelkolbens in dem zweiten hohlzylindrischen, radial äußeren Fortsatz der Führung geführt ist.

Um das Eindringen von Schmutz in die Führung zu vermeiden, kann der Bereich größeren Durchmessers des Stößelkolbens im zweiten zylindrischen Fortsatz mittels, eines Dichtelements abgedichtet geführt sein. Die beschriebene doppelte Führung erstreckt sich über eine größere axiale Länge, so dass ein Kippen des Stößelkolbens und ein dadurch bewirktes Verklemmen verhindert werden.

Durch die Ausbildung als Stufenkolben mit einem Bereich größeren Durchmessers und einem Bereich kleineren Durchmessers lässt sich auf einfache Weise ein Absatz zwischen dem ersten hohlzylindrischen Fortsatz der Führung und dem zweiten hohlzylindrischen Fortsatz der Führung anordnen, der einen Anschlag für den maximalen Weg des Stößelkolbens bildet.

Gemäß einer Ausführungsform kann vorgesehen sein, dass der Radialflansch der Führung den Flansch des Gehäusedeckels einschließlich dessen Bohrungen radial übergreift, dass der Radialflansch der Führung selbst Bohrungen zur Aufnahme von Schrauben aufweist, und dass der Radialflansch der Führung zusammen mit dem Gehäusedeckel mit dem Gehäuse verschraubt ist.

Eine andere Ausführungsform sieht vor, dass der Radialflansch der Führung den Flansch des Gehäusedeckels nur außerhalb des Bereichs der Bohrungen des Gehäusedeckels zur Verschraubung des Gehäusedeckels mit dem Gehäuse übergreift, und dass der Radialflansch der Führung axial in Öffnungen im Flansch des Gehäusedeckels eingreifende sowie den Flansch des Gehäusedeckels hintergreifende Rastvorsprünge aufweist.

Diese Anordnung lässt sich auf einfache Weise durch eine entsprechende konstruktive Gestaltung des Gehäusedeckels sowie der Führung beim jeweiligen Gießvorgang verwirklichen, und vereinfacht die Montage durch einfaches Zusammenklipsen der Führung mit dem Gehäusedeckel.

Die eingangs erwähnte Aufgabe wird des Weiteren gelöst durch die Verwendung der vorstehend definierten Anordnung in einem bremspedalbetätigten, pneumatischen Bremswertgeber für ein Druckluftbremssystem eines Fahrzeugs zum Ausregeln eines einer gewünschten Bremswirkung entsprechenden Bremsdrucks.

Die beschriebene Anordnung ist nicht auf die Verwendung in einem Bremswertgeber beschränkt, sondern umfasst auch andere Anordnungen mit einem in einer Führung in einem Gehäusedeckel angeordneten Stößelkolben, welcher über eine Druckfeder auf einen in einem Gehäuse geführten Kolben wirkt.

Die Erfindung wird nachstehend anhand zweier in der Zeichnung dargestellter Ausführungsbeispiele weiter erläutert. In der Zeichnung zeigt
Fig. 1 eine Anordnung gemäß der Erfindung in Schnittdarstellung in Verbindung mit einem pneumatischen Bremswertgeber in einer ersten Ausführungsform,
Fig. 2 eine perspektivische Schrägansicht von oben auf die Anordnung gemäß Fig. 1,
Fig. 3 eine perspektivische Schrägansicht von unten auf die Anordnung gemäß Fig. 1,
Fig. 4 eine perspektivische Schnittdarstellung der Anordnung gemäß Fig. 1,
Fig. 5 eine Anordnung gemäß der Erfindung in Schnittdarstellung in Verbindung mit einem pneumatischen Bremswertgeber in einer zweiten Ausführungsform,
Fig. 6 eine perspektivische Schrägansicht von oben auf die Anordnung gemäß Fig. 5,
Fig. 7 eine perspektivische Schrägansicht von unten auf die Anordnung gemäß Fig. 5, und
Fig. 8 eine perspektivische Schnittdarstellung der Anordnung gemäß auf die Anordnung gemäß Fig. 5.

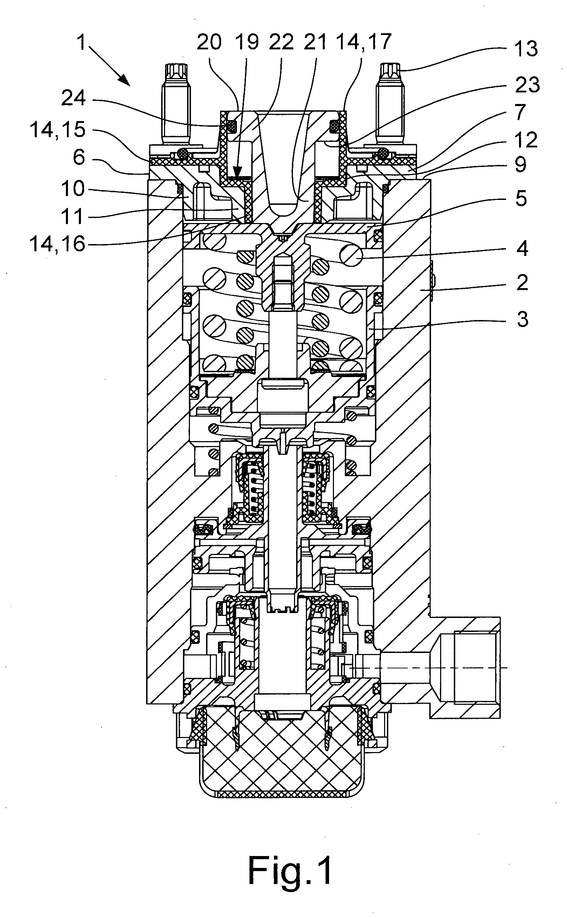

Die Fig. 1 zeigt demnach eine Schnittdarstellung eines bremspedalbetätigten, pneumatischen Bremswertgebers 1 für ein Druckluftbremssystem eines Fahrzeugs zum Ausregeln eines einer gewünschten Bremswirkung entsprechenden Bremsdrucks. Die zum Ausregeln eines einer gewünschten Bremswirkung entsprechenden Bremsdrucks vorgesehenen Bauelemente in dem pneumatischen Bremswertgeber 1 sind allgemein bekannt und beispielsweise in der DE 33 43 172 A1 im Einzelnen dargestellt sowie beschrieben, sie sind aber nicht Teil der vorliegenden Erfindung und daher hier nicht im Einzelnen erläutert.

Der Bremswertgeber 1 weist ein Gehäuse 2 auf, in dem ein Kolben 3 abgedichtet geführt ist. Dieser Kolben 3 dient als Ventilträger und seine Funktion wird hier nur bezüglich der erfindungsgemäßen Anordnung beschrieben. Auf den Kolben 3 wirkt eine Druckfeder 4, die sich mit ihrem kolbenfernen Ende über eine Druckplatte 5 an einem Gehäusedeckel 6 abstützt.

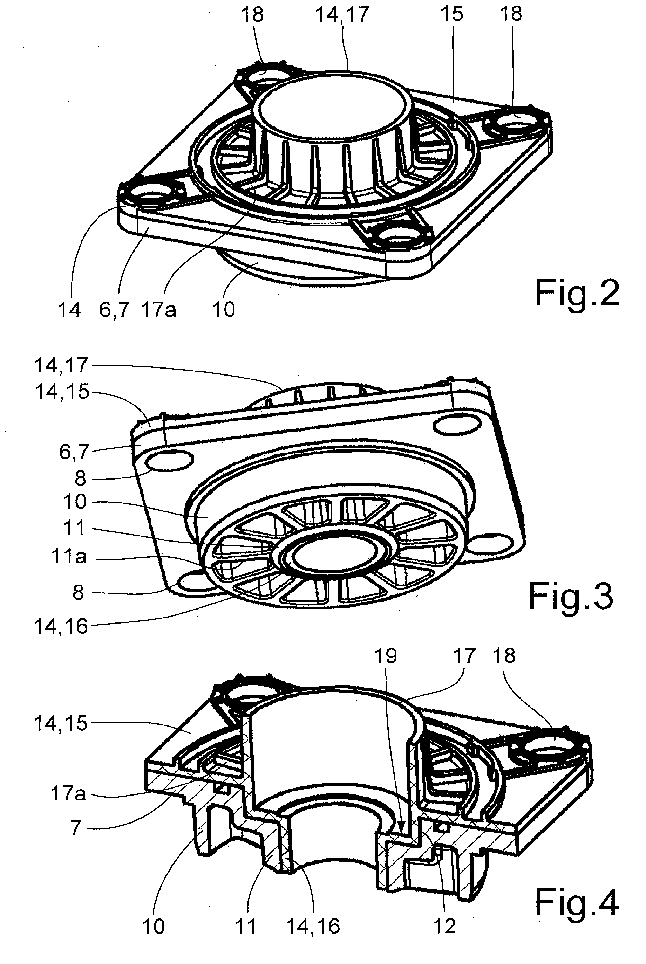

Der Gehäusedeckel 6 umfasst einen eine axiale Endfläche 9 des Gehäuses 2 radial übergreifenden Flansch 7, der, wie aus den Figuren 2 bis 4 ersichtlich, Bohrungen 8 zur Aufnahme von Befestigungsschrauben 13 aufweist, mittels denen der Gehäusedeckel 6 mit dem Gehäuse 2 verschraubbar ist.

Der Gehäusedeckel 6 weist einen ersten, radial äußeren hohlzylindrischen Fortsatz 10 auf, der in das abgedichtet Gehäuse 2 eingepasst ist, sowie einen zweiten, dazu koaxialen, hohlzylindrischen, radial inneren Fortsatz 11 mit kleinerem Durchmesser als der erste radial äußeren hohlzylindrische Fortsatz 10. Der radial inneren Fortsatz 11 ragt frei in das Gehäuse 2 hinein und dient auch als axialer Anschlag für den Kolben 3. Der zweite, radial inneren Fortsatz 11 des Gehäusedeckels 6 ist im Bereich des Flansches 7 des Gehäusedeckels 6 zu einem größeren Durchmesser 12 hin abgesetzt ausgebildet.

Zur Versteifung des Gehäusedeckels 6 sind zwischen dem ersten, radial äußeren hohlzylindrischen Fortsatz 10 und dem zweiten radial inneren hohlzylindrischen Fortsatz 11 Radialrippen 11 a angeordnet, welches in den Figuren 2 bis 4 sehr deutlich zu erkennen ist.

Der Gehäusedeckel 6 ist einteilig als Druckgussteil aus einer Leichtmetalllegierung hergestellt und erfordert nach dem Druckgussvorgang keinerlei mechanische Bearbeitung. Die konstruktive Gestaltung des Gehäusedeckels 6 mit dem radial äußeren Fortsatz 10 und dem radial inneren Fortsatz 11 sowie den diese Fortsätze 10, 11 verbindenden Radialrippen 11a bewirkt, dass der Gehäusedeckel 6 die durch die vergleichsweise starke Druckfeder 4 über die Druckplatte 5 eingeleiteten Kräfte problemlos aufnehmen kann.

Eine Führung 14, die als Spritzgussteil aus einem Kunststoff mit guten Gleiteigenschaften hergestellt ist, weist einen ringförmig umlaufenden Radialflansch 15 sowie einen ersten hohlzylindrischen, radial inneren Fortsatz 16 auf, der in den radial inneren hohlzylindrischen Fortsatz 10 des Gehäusedeckels 6 eingepasst ist und zur Aufnahme sowie zur Führung eines Bereichs 21 eines Stößelkolbens 20 dient, welcher, weil radial innen angeordnet, einen vergleichsweise kleineren Durchmesser aufweist. Ein zweiter hohlzylindrischer, radial äußerer Fortsatz 17 ragt axial nach außen über den Radialflansch 15 der Führung 14 hinaus.

Wie insbesondere die Figuren 2 bis 4 zeigen, ist der radial äußere Fortsatz 17 der Führung 14 durch Radial-Axial-Rippen 17a verstärkt und versteift, die außen am radial äußeren Fortsatz 17 sowie an der federfernen Oberseite des Radialflansches 15 ausgebildet sind.

Der radial äußere hohlzylindrische Fortsatz 17 weist erkennbar einen größeren Durchmesser auf als der radial innere hohlzylindrische Fortsatz 16 der Führung 14, und radial äußere hohlzylindrische Fortsatz 17 ist in den Bereich 12 mit größerem Durchmesser des Flansches 7 des Gehäusedeckels 6 eingepasst. Hierdurch ist ein Absatz 19 zwischen dem ersten Fortsatz 16 und dem zweiten Fortsatz 17 gebildet, an den ein Absatz 23 am Stößelkolben 20 am Ende dessen Betätigungsbewegung anlegbar ist.

Der Stößelkolben 20 ist als Stufenkolben mit einem federnahen Bereich 21 kleineren Durchmessers und einem federfernen Bereich 22 größeren Durchmessers ausgebildet. Der Stößelkolben 20 ist mit seinem Bereich 21 kleineren Durchmessers im ersten, radial inneren Fortsatz 16 der Führung 14 und mit seinem Bereich 22 größeren Durchmessers im zweiten, radial äußeren Fortsatz 17 der Führung 14 abgedichtet geführt. Die Abdichtung erfolgt mittels eines Dichtrings 24, der in eine Ringnut im Stößelkolben 20 eingesetzt ist. Somit liegt eine doppelte Führung des Stößelkolbens 20 im ersten, radial inneren Fortsatzes 16 mit dem Bereich 21 kleineren Durchmessers und im zweiten, radial äußeren Fortsatzes 17 mit dem Bereich 22 größeren Durchmessers vor, die ein Verkippen des Stößelkolbens 20 sicher verhindert.

Die Gefahr eines Verkippens des Stößelkolbens 20 wird des Weiteren dadurch herabgemindert, dass der Angriffspunkt einer in den Stößelkolben 20 eingreifenden, nicht dargestellten Schubstange im Bereich des ersten, radial inneren Fortsatzes 16 am Radialflansch 15 der Führung 14 liegt, und dadurch kein Kippmoment auf den Stößelkolben 20 wirken kann.

Der Stößelkolben 20 stützt sich, wie schon erwähnt, an der Druckplatte 5 ab und verschiebt diese und damit auch den einen Ventilträger bildenden Kolben 3, wenn der Stößelkolben 20 mittels der nicht dargestellten Schubstange in der Führung 14 verschoben wird. Hierdurch wird in bekannter, in der DE 33 43 172 C2 beschriebenen Weise mittels des dargestellten Bremswertgebers 1 ein einer gewünschten Bremswirkung entsprechender Bremsdruck ausgeregelt.

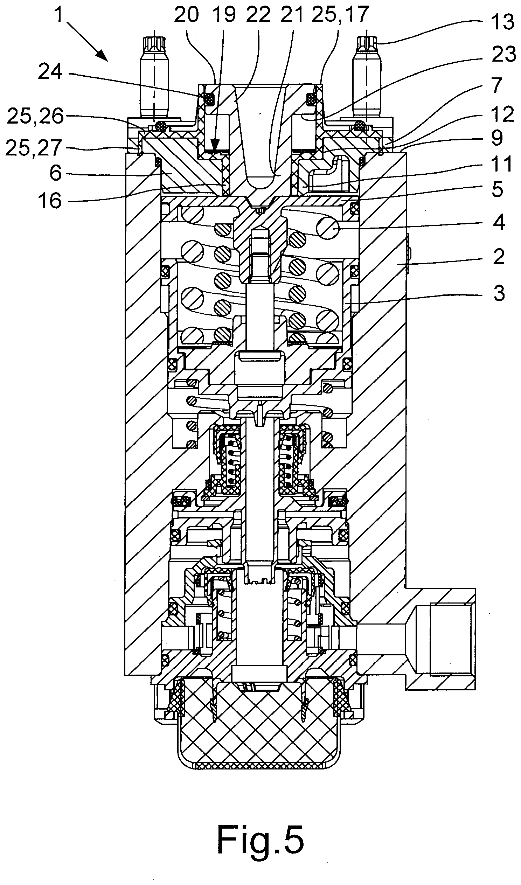

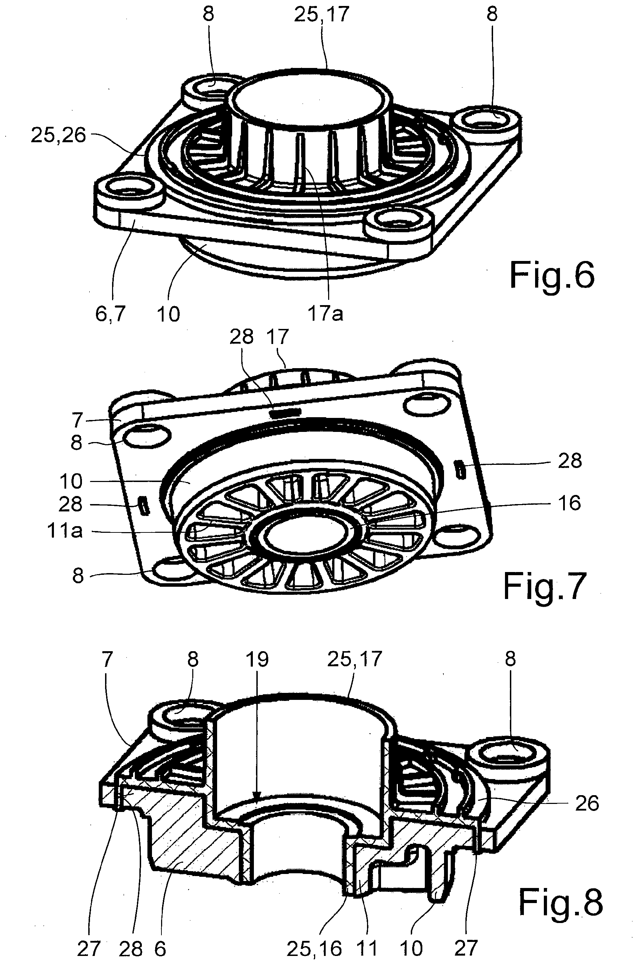

Während die Ausführungsform gemäß den Figuren 1 bis 4 eine Verschraubung der Führung 14 mit dem Gehäusedeckel 6 und dem Gehäuse 2 des Bremswertgebers 1 zeigt, stellt die Ausführungsform gemäß den Figuren 5 bis 8 eine Verklipsung einer Führung 25 mit dem Gehäusedeckel 7 dar.

Die Bezugsziffern in den Figuren 5 bis 8 sind nur hinsichtlich der Verbindung zwischen der Führung 25 und dem Gehäusedeckel 6 geändert, in den Figuren 1 bis 4 übereinstimmende Elemente sind mit den gleichen Bezugsziffern bezeichnet.

Bei der Ausführungsform gemäß den Figuren 5 bis 8 weist die Führung 25 einen Radialflansch 26 auf, der den Flansch 7 des Gehäusedeckels 6 nur außerhalb des Bereichs der Bohrungen 8 des Gehäusedeckels 6 zur Verschraubung des Gehäusedeckels 6 mit dem Gehäuse 2 übergreift. Eine montage- und benutzungssichere Verbindung zwischen der Führung 25 und dem Gehäusedeckel 6 erfolgt bei dieser Ausführungsform mittels axial vorstehender Rastvorsprünge 27, die in entsprechende Rastöffnungen 28 im Flansch 7 des Gehäusedeckels 6 eingreifen und sich mit dem Flansch 7 des Gehäusedeckels 6 verklipsen lassen. Da auf die Führung 25 keine großen Axialkräfte einwirken, ist diese Verklipsung der Führung 25 mit dem Gehäusedeckel 6 ausreichend sowie für die Montage vorteilhaft, da sich die Führung 25 und der Gehäusedeckel 6 vor dem Zusammenschrauben mit dem Gehäuse 2 positionsgenau miteinander verklipsen lassen, so dass kein Ausrichten der Führung 25 gegenüber dem Gehäusedeckel 6 beim Verschrauben notwendig ist.

Alle in der vorstehenden Figurenbeschreibung, in den Ansprüchen und in der Beschreibungseinleitung genannten Merkmale sind sowohl einzeln als auch in beliebiger Kombination miteinander einsetzbar.

### Bezugszeichenliste (Bestandteil der Beschreibung)

- 1: Bremswertgeber
- 2: Gehäuse
- 3: Kolben
- 4: Druckfeder
- 5: Druckplatte
- 6: Gehäusedeckel
- 7: Flansch des Gehäusedeckels
- 8: Bohrungen im Gehäusedeckel
- 9: Endfläche des Gehäuses
- 10: Radial äußerer zylindrischer Fortsatz des Gehäusedeckels
- 11: Radial innerer zylindrischer Fortsatz des Gehäusedeckels
- 11a: Radialrippen an Führung
- 12: Bereich größeren Durchmessers
- 13: Befestigungsschraube
- 14: Führung
- 15: Radialflansch der Führung 14
- 16: Erster Fortsatz kleineren Durchmessers an der Führung 14
- 17: Zweiter Fortsatz größeren Durchmessers an der Führung 14
- 17a: Radial-Axial-Rippen an Führung 14
- 18: Bohrungen in Führung 14
- 19: Absatz an der Führung 14
- 20: Stößelkolben
- 21: Radial innerer Bereich des Stößelkolbens
- 22: Radial äußerer Bereich des Stößelkolbens
- 23: Absatz am Stößelkolben
- 24: Dichtring
- 25: Führung
- 26: Radialflansch
- 27: Rastvorsprünge an der Führung 25
- 28: Rastöffnungen im Gehäusedeckel 6

## Patentansprüche

1. Anordnung mit einem in einer Führung (14, 25) in einem Gehäusedeckel (6) angeordneten Stößelkolben (20), der über eine Druckplatte (5) und eine Druckfeder (4) auf einen in einem Gehäuse (2) geführten Kolben (3) wirkt, wobei der Gehäusedeckel (6) mit dem Gehäuse (2) verschraubt ist, **dadurch gekennzeichnet dass** der Gehäusedeckel (6) aus einem formfesten, in den Einbauabmessungen gießbaren Material besteht, dass die Führung (14, 25) aus einem formfesten, in den Einbauabmessungen gießbaren Material mit guten Gleiteigenschaften besteht, und dass die Führung (14, 25) mit dem Gehäusedeckel (6) verschraubt oder verklipst ist.

2. Anordnung nach Anspruch 1, **dadurch gekennzeichnet, dass** der Gehäusedeckel (6) aus einer Leichtmetalllegierung besteht und als Druckgussteil ohne zusätzliche mechanische Bearbeitung hergestellt ist.

3. Anordnung nach Anspruch 1, **dadurch gekennzeichnet, dass** die Führung (14, 25) aus einem spritzgießfähigen Kunststoff besteht und als Spritzgussteil ohne zusätzliche mechanische Bearbeitung hergestellt ist.

4. Anordnung nach einem der Ansprüche 1 bis 3, **dadurch gekennzeichnet, dass** der Gehäusedeckel (6) einen Flansch (7) mit Bohrungen (8) zum Verschrauben mit einer Endfläche (9) des Gehäuses (2) sowie einen zylindrischen, in das Gehäuse (2) eingeführten Fortsatz (11) aufweist, dass die Führung (14, 25) einen den Flansch (7) des Gehäusedeckels (6) wenigstens teilweise übergreifenden und auf diesen aufliegenden Radialflansch (15, 26) sowie eine in den zylindrischen Fortsatz (11) des Gehäusedeckels (6) spielfrei eingepassten koaxialen hohlzylindrischen Fortsatz (16) zur Aufnahme und Führung des Stößelkolbens (20) aufweist.

5. Anordnung nach Anspruch 4, **dadurch gekennzeichnet, dass** der Gehäusedeckel (6) einen ersten, in das Gehäuse (2) eingepassten radial äußeren hohlzylindrischen Fortsatz (10) und einen zweiten, koaxialen, frei in das Gehäuse (2) ragenden, radial inneren hohlzylindrischen Fortsatz (11) aufweist,
dass der radial innere Fortsatz (11) im Bereich des Flansches (7) des Gehäusedeckels (6) zu einem Bereich (12) mit größerem Durchmesser hin abgesetzt ist,
dass die Führung (14, 25) einen in den zweiten radial inneren Fortsatz (11) des Gehäusedeckels (6) eingepassten hohlzylindrischen, radial inneren ersten Fortsatz (16) sowie einen koaxialen, über den auf dem Flansch (7) des Gehäusedeckels (6) aufliegenden Radialflansch (15, 26) der Führung (14, 25) axial hinausragenden, zweiten hohlzylindrischen Fortsatz (17) aufweist,
dass der Stößelkolben (20) als Stufenkolben ausgebildet ist, dessen Bereich (21) kleineren Durchmessers in dem in den radial inneren Fortsatz (11) des Gehäusedeckels (6) eingepassten radial inneren Fortsatz (16) der Führung (14, 25) geführt ist,
und dass der Bereich (22) größeren Durchmessers des Stößelkolbens (20) in dem zweiten hohlzylindrischen, radial äußeren Fortsatz (17) der Führung (14, 25) abgedichtet geführt ist.

6. Anordnung nach Anspruch 5, **dadurch gekennzeichnet, dass** ein Absatz (19) zwischen dem radial inneren hohlzylindrischen Fortsatz (16) der Führung (14, 25) und dem radial äußeren hohlzylindrischen Fortsatz (17) der Führung (14, 25) einen Anschlag für den maximalen Weg des Stößelkolbens (20) bildet.

7. Anordnung nach Anspruch 4, **dadurch gekennzeichnet, dass** der Radialflansch (15) der Führung (14) den Flansch (7) des Gehäusedeckels (6) einschließlich dessen Bohrungen (8) radial übergreift, dass der Radialflansch (15) der Führung (14) selbst Bohrungen (18) zur Aufnahme von Schrauben aufweist, und dass der Radialflansch (15) der Führung (14) zusammen mit dem Gehäusedeckel (6) mit dem Gehäuse (2) verschraubt ist.

8. Anordnung nach Anspruch 4, **dadurch gekennzeichnet, dass** der Radialflansch (26) der Führung (25) den Flansch (7) des Gehäusedeckels (6) nur außerhalb des Bereichs der Bohrungen (8) des Gehäusedeckels (6) zur Verschraubung des Gehäusedeckels (6) mit dem Gehäuse (2) übergreift, und dass der Radialflansch (26) der Führung (25) axial in Öffnungen (28) im Flansch (7) des Gehäusedeckels (6) eingreifende sowie den Flansch (7) des Gehäusedeckels (6) hintergreifende Rastvorsprünge (27) aufweist.

9. Verwendung der Anordnung gemäß einem der vorherigen Ansprüche in einem bremspedalbetätigten, pneumatischen Bremswertgeber (1) für ein Druckluftbremssystem eines Fahrzeugs zum Ausregeln eines einer gewünschten Bremswirkung entsprechenden Bremsdrucks.

## Claims

1. Arrangement having a plunger piston (20) which is arranged in a guide (14, 25) in a housing cover (6) and which acts via a pressure plate (5) and a pressure spring (4) on a piston (3) which is guided in a housing (2), wherein the housing cover (6) is screwed together with the housing (2), **characterized in that** the housing cover (6) is composed of a dimensionally stable material which can be cast in the installation dimensions, **in that** the guide (14, 25) is composed of a dimensionally stable material which can be cast in the installation dimensions and which has good sliding characteristics, and **in that** the guide (14, 25) is screwed or clipped together with the housing cover (6).

2. Arrangement according to Claim 1, **characterized in that** the housing cover (6) is composed of a light metal alloy and is produced as a diecast part without additional mechanical machining.

3. Arrangement according to Claim 1, **characterized in that** the guide (14, 25) is composed of an injection-mouldable plastic and is produced as an injection-moulded part without additional mechanical machining.

4. Arrangement according to any of Claims 1 to 3, **characterized in that** the housing cover (6) has a flange (7) with bores (8) for screw connection to an end surface (9) of the housing (2), and has a cylindrical projection (11) which is inserted into the housing (2), **in that** the guide (14, 25) has a radial flange (15, 26), which at least partially engages over, and lies on, the flange (7) of the housing cover (6), and a coaxial hollow cylindrical projection (16), which is fitted without play into the cylindrical projection (11) of the housing cover (6) and which serves for receiving and guiding the plunger piston (20).

5. Arrangement according to Claim 4, **characterized in that** the housing cover (6) has a first, radially outer hollow cylindrical projection (10), which is fitted into the housing (2), and a second, coaxial, radially inner hollow cylindrical projection (11), which projects freely into the housing (2),
**in that** the radially inner projection (11) is, in the region of the flange (7) of the housing cover (6), formed with a shoulder in the direction of a region (12) of large diameter,
**in that** the guide (14, 25) has a hollow cylindrical, radially inner first projection (16), which is fitted into the second, radially inner projection (11) of the housing cover (6), and a coaxial second hollow cylindrical projection (17), which projects axially beyond the radial flange (15, 26), which lies on the flange (7) of the housing cover (6), of the guide (14, 25),
**in that** the plunger piston (20) is formed as a stepped piston, whose region (21) of relatively small diameter is guided in the radially inner projection (16), which is fitted into the radially inner projection (11) of the housing cover (6), of the guide (14, 25),
and **in that** the region (22) of relatively large diameter of the plunger piston (20) is guided in the second hollow cylindrical, radially outer projection (17) of the guide (14, 25).

6. Arrangement according to Claim 5, **characterized in that** a shoulder (19) between the radially inner hollow cylindrical projection (16) of the guide (14, 25) and the radially outer hollow cylindrical projection (17) of the guide (14, 25) forms a stop for the maximum travel of the plunger piston (20).

7. Arrangement according to Claim 4, **characterized in that** the radial flange (15) of the guide (14) engages radially over the flange (7) of the housing cover (6) including the bores (8) thereof, **in that** the radial flange (15) of the guide (14) itself has bores (18) for receiving screws, and **in that** the radial flange (15) of the guide (14) is, together with the housing cover (6), screwed to the housing (2).

8. Arrangement according to Claim 4, **characterized in that** the radial flange (26) of the guide (25) engages over the flange (7) of the housing cover (6) only outside the region of the bores (8) of the housing cover (6) for the screw connection of the housing cover (6) to the housing (2), and **in that** the radial flange (26) of the guide (25) has detent projections (27) which engage axially into openings (28) in the flange (7) of the housing cover (6) and which engage behind the flange (7) of the housing cover (6).

9. Use of the arrangement according to any of the preceding claims in a brake-pedal-actuated, pneumatic brake value transducer (1) for a compressed-air brake system of a vehicle for regulating a brake pressure corresponding to a desired braking action.

## Revendications

1. Dispositif avec un piston-poussoir (20) disposé dans un guide (14, 25) dans un couvercle de boîtier (6), qui agit par une plaque de pression (5) et un ressort de pression (4) sur un piston (3) guidé dans un boîtier (2), dans lequel le couvercle de boîtier (6) est vissé sur le boîtier (2),
**caractérisé en ce que** le couvercle de boîtier (6) se compose d'un matériau de forme stable, pouvant être coulé aux dimensions de montage, **en ce que** le guide (14, 25) se compose d'un matériau de forme stable, présentant de bonnes propriétés de glissement et pouvant être coulé aux dimensions de montage, et **en ce que** le guide (14, 25) est vissé ou attaché par des clips au couvercle de boîtier (6).

2. Dispositif selon la revendication 1, **caractérisé en ce que** le couvercle de boîtier (6) se compose d'un alliage de métal léger et est fabriqué sous la forme d'une pièce coulée sous pression sans aucun usinage mécanique supplémentaire.

3. Dispositif selon la revendication 1, **caractérisé en ce que** le guide (14, 25) se compose d'une matière plastique pouvant être moulée par injection et est fabriqué sous la forme d'une pièce moulée par injection sans aucun usinage mécanique supplémentaire.

4. Dispositif selon l'une quelconque des revendications 1 à 3, **caractérisé en ce que** le couvercle de boîtier (6) présente une bride (7) avec des trous (8) pour le vissage à une face d'extrémité (9) du boîtier (2) ainsi qu'un prolongement cylindrique (11) introduit dans le boîtier (2), **en ce que** le guide (14, 25) présente une bride radiale (15, 26) recouvrant au moins en partie la bride (7) du couvercle de boîtier (6) et reposant sur cette dernière ainsi qu'un prolongement cylindrique creux coaxial (16) ajusté sans jeu dans le prolongement cylindrique (11) du couvercle de boîtier (6) afin de contenir et de guider le piston-poussoir (20).

5. Dispositif selon la revendication 4, **caractérisé en ce que**
le couvercle de boîtier (6) présente un premier prolongement cylindrique creux radialement extérieur (10) ajusté dans le boîtier (2) et un deuxième prolongement cylindrique creux radialement intérieur coaxial (11), engagé librement dans le boîtier (2),
le prolongement radialement intérieur (11) est en retrait dans la région de la bride (7) du couvercle de boîtier (6) en direction d'une région (12) de plus grand diamètre,
le guide (14, 25) présente un premier prolongement cylindrique creux radialement intérieur (16) ajusté dans le deuxième prolongement radialement intérieur (11) du couvercle de boîtier (6) ainsi qu'un deuxième prolongement cylindrique creux coaxial (17) s'étendant axialement au-delà de la bride radiale (15, 26) du guide (14, 25) reposant sur la bride (7) du couvercle de boîtier (6),
le piston-poussoir (20) est formé par un piston étagé, dont la région (21) de plus petit diamètre est guidée dans le prolongement radialement intérieur (16) du guide (14, 25) ajusté dans le prolongement radialement intérieur (11) du couvercle de boîtier (6), et
la région (22) de plus grand diamètre du piston-poussoir (20) est guidée de façon étanche dans le deuxième prolongement cylindrique creux radialement extérieur (17) du guide (14, 25).

6. Dispositif selon la revendication 5, **caractérisé en ce qu'**un épaulement (19) entre le prolongement cylindrique creux radialement intérieur (16) du guide (14, 25) et le prolongement cylindrique creux radialement extérieur (17) du guide (14, 25) forme une butée pour la course maximale du piston-poussoir (20).

7. Dispositif selon la revendication 4, **caractérisé en ce que** la bride radiale (15) du guide (14) recouvre radialement la bride (7) du couvercle de boîtier (6) y compris ses trous (8), **en ce que** la bride radiale (15) du guide (14) présente elle-même des trous (18) destinés à recevoir des vis, et **en ce que** la bride radiale (15) du guide (14) est vissée au boîtier (2) en même temps que le couvercle de boîtier (6).

8. Dispositif selon la revendication 4, **caractérisé en ce que** la bride radiale (26) du guide (25) ne recouvre la bride (7) du couvercle de boîtier (6) qu'à l'extérieur de la région des trous (8) du couvercle de boîtier (6) pour le vissage du couvercle de boîtier (6) au boîtier (2), et **en ce que** la bride radiale (26) du guide (25) présente des saillies d'encliquetage (27) s'engageant axialement dans des ouvertures (28) dans la bride (7) du couvercle de boîtier (6) et s'accrochant derrière la bride (7) du couvercle de boîtier (6).

9. Utilisation du dispositif selon l'une quelconque des revendications précédentes dans une soupape pneumatique de freinage (1), commandée par une pédale de frein, pour un système de freinage par air comprimé d'un véhicule pour réguler une pression de freinage correspondant à un effet de freinage désiré.
